Europäisches Patentamt

European Patent Office

Office européen des brevets

(19)

(11) EP 0 389 341 B1

(12) **FASCICULE DE BREVET EUROPEEN**

(45) Date de publication et mention
de la délivrance du brevet:
**18.09.1996 Bulletin 1996/38**

(51) Int Cl.⁶: **H04B 3/08**, H04B 3/06

(21) Numéro de dépôt: **90400713.5**

(22) Date de dépôt: **16.03.1990**

(54) **Dispositif de compensation d'une ligne de transmission d'un réseau de télédistribution**

Kompensationsvorrichtung für eine Übertragungsleitung eines Fernsehverteilungsnetzes

Transmission line compensating apparatus for teledistribution network

(84) Etats contractants désignés:
AT BE CH DE ES FR GB GR IT LI LU NL SE

(30) Priorité: **21.03.1989 FR 8903673**

(43) Date de publication de la demande:
**26.09.1990 Bulletin 1990/39**

(73) Titulaire: **THOMSON multimedia**
**92400 Courbevoie (FR)**

(72) Inventeur: **Pham van Cang, Luc**
**F-92045 Paris la Défense (FR)**

(74) Mandataire: **Ruellan-Lemonnier, Brigitte et al**
**THOMSON Multimedia,**
**9 Place des Vosges**
**La Défense 5**
**92050 Paris La Défense (FR)**

(56) Documents cités:
**DE-A- 2 222 131**        **US-A- 4 242 650**

• **"Integrated Electronics: Analog and Digital
Circuits and Systems", Millman & Halkias,
McGraw-Hill 1985, page 540, section 16-2 et
figure 16-5.**

**Description**

La présente invention se rapporte à un dispositif de compensation d'une ligne de transmission d'un réseau de télédistribution.

Dans le cadre des réseaux de distribution de signaux vidéo et audio par câble, ou plus généralement d'une transmission d'informations à large bande passante, il est nécessaire de corriger les distorsions introduites par le câble. Les signaux vidéo et audio sont à distribuer à des distances variant généralement de quelques dizaines de mètres à quelques centaines de mètres avec des câbles à faible coût tels que ceux utilisés pour les transmissions téléphoniques et télématiques. Ces câbles peuvent comprendre plusieurs paires de conducteurs séparées par des écrans métalliques et un conducteur de continuité permettant de réaliser une liaison équipotentielle entre les équipements à connecter. De tels câbles, utilisés pour transmettre des signaux jusqu'à 10 MHz, nécessitent la mise en oeuvre de techniques de compensation justifiées par le faible coût du câble bifilaire comparé au câble coaxial utilisable dans le même domaine.

Typiquement, la distribution de signaux vidéo à des distances de 20 à 600 mètres, dans un spectre de fréquences allant de 25 Hz à 9 MHz, provoque des variations de niveau entre les fréquences les plus basses et les fréquences les plus élevées selon une loi de variation amplitude/fréquence propre au câble choisi et qui peut atteindre, voire dépasser 30 dB. Il s'agit plus précisément d'une atténuation en fonction de la fréquence que l'on peut corriger au moyen de dipôles à résistance et capacité en réalisant un circuit de correction dont la réponse est le plus exactement possible l'inverse de la réponse du câble pour une certaine longueur de ce câble. Le dispositif de correction est prévu pour combiner plusieurs corrections élémentaires correspondant à plusieurs longueurs de câble choisies de façon à réaliser par association des corrections adéquates quelle que soit la longueur de câble rencontrée dans une liaison couvrant les distances précitées.

Dans le domaine de la liaison vidéo entre une caméra de télévision et son dispositif de commande et de contrôle, il est connu d'utiliser des amplificateurs vidéo avec des réseaux RC associés à la charge ou à la résistance de contre-réaction. Ces amplificateurs forment les maillons d'une chaîne de correction et sont commutables par insertion ou retrait de façon à réaliser des corrections par liaison en cascade de cellules correctrices établies par exemple pour des distances en progression géométrique de raison égale à 2. Une telle réalisation comportant trois modules pour 50, 100 et 200 mètres permet la correction de liaisons de 0 à 350 mètres avec une distorsion résiduelle correspondant à une liaison de 25 mètres.

L'inconvénient du dispositif de correction connu réside dans la mise en oeuvre de plusieurs amplificateurs correcteurs, ce qui augmente le prix et diminue la fiabilité.

On connaît d'après le document DE-A-2 222 131 un circuit de compensation d'affaiblissement en fonction de la fréquence d'un câble d'antenne, mais ce circuit fonctionne à des fréquences très élevées (UHF) et se rapporte à un câble coaxial.

La présente invention a pour objet un dispositif de correction pour des câbles du type précité, dispositif qui ne fasse appel qu'à un seul amplificateur, qui soit simple et peu onéreux.

Le dispositif de correction conforme à la présente invention est un dispositif de compensation d'une ligne de transmission d'un réseau de télédistribution disposé en cascade avec cette ligne, et fonctionnant à des fréquences comprises entre 25Hz et 10MHz, ce dispositif comportant à l'une au moins des extrémités de cette ligne des moyens amplificateurs, des moyens à réactance destinés à égaliser la caractéristique amplitude/fréquence de la ligne, et des moyens commutateurs sélectionnant des moyens à mettre en oeuvre pour une longueur de câble prédéterminée parmi plusieurs, comportant un amplificateur unique à étage de sortie du type à charge partagée entre le collecteur et l'émetteur, la charge d'émetteur comportant des éléments commutables, caractérisé par le fait qu'il comporte à au moins une extrémité du câble à compenser l'amplificateur unique dont la charge comporte une partie réactive commutable constituée par au moins un condensateur non galvanique et par une résistance définissant ensemble une admittance adaptée à la compensation de la distorsion amplitude/fréquence.

Selon une autre caractéristique de l'invention, la charge réactive comporte une résistance en parallèle avec au moins une cellule commutable de façon à effectuer des corrections correspondant à plusieurs longueurs de câble différentes.

Selon une autre caractéristique de l'invention, on branche un circuit de contre-réaction sur la sortie du circuit amplificateur qui est reliée à la charge réactive.

La présente invention sera mieux comprise à la lecture de la description détaillée de plusieurs modes de réalisation pris comme exemples non limitatifs et illustrés par le dessin annexé, sur lequel :

- la figure 1 est un bloc-diagramme d'un dispositif de correction de l'art antérieur ;

- la figure 2 est un bloc-diagramme d'un dispositif de correction conforme à l'invention ;

- la figure 3 est un diagramme d'un exemple de variation d'atténuation en fonction de la fréquence d'un câble bifilaire d'une longueur de 100 mètres;

- la figure 4 est un bloc-diagramme d'une variante d'un dispositif de correction conforme à l'invention;

- la figure 5 est un diagramme illustrant les propriétés d'un dispositif de correction conforme à l'invention et réalisant la correction pour des longueurs de câble de 0, 100, 200 et 300 mètres;

- la figure 6 est un schéma d'un exemple de cellule réactive utilisable dans le dispositif de correction de l'invention; et

- les figures 7 à 9 sont des schémas de dispositifs de correction conformes à l'invention.

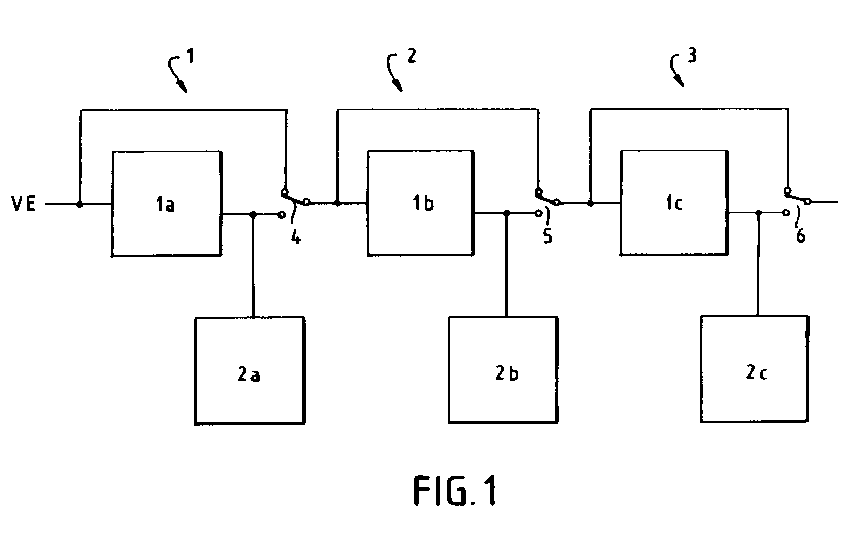

Le dispositif de correction schématiquement représenté en figure 1 comporte trois cellules, respectivement référencées 1, 2 et 3, disposées en cascade. Chacune de ces cellules comporte un amplificateur avec sa charge réactive (respectivement référencés 1a à 1c et 2a à 2c). Des inverseurs 4, 5, 6, placés à la sortie des cellules 1 à 3 respectivement, permettent de sélectionner soit la sortie de la cellule correspondante soit son entrée (pontage de la cellule). Les corrections réalisées par ces cellules peuvent correspondre à des distances D, 2D et 4D respectivement. La présente invention se propose de n'utiliser qu'un seul amplificateur pour réaliser le même type de corrections.

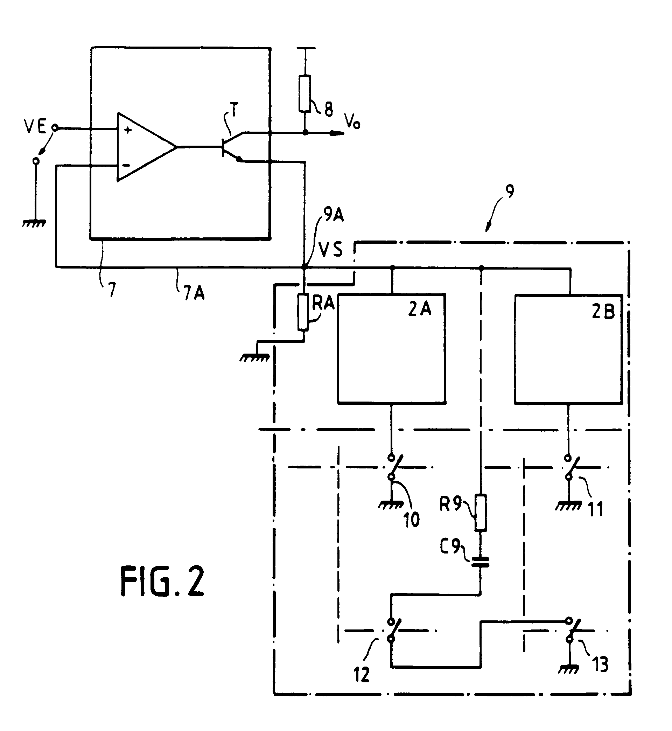

Le dispositif de correction conforme à l'invention, représenté de façon simplifiée en figure 2, comprend essentiellement un circuit amplificateur unique 7, dont la charge est partagée entre le collecteur et l'émetteur du transistor de sortie T, à savoir une première charge 8 purement résistive, et une seconde charge réactive 9 de correction. La charge 8 est par exemple celle de collecteur, et la charge 9 celle d'émetteur. Cette charge 9 est un dipôle réactif branché entre une borne 9A et la masse. Le circuit amplificateur représenté en figure 2 est du type à sortie asymétrique, mais il est bien entendu que l'entrée et/ou la sortie peuvent être du type symétrique. On prévoit une liaison de contre-réaction 7A entre l'émetteur du transistor de sortie T et une entrée du circuit 7, afin de faire suivre à la tension de sortie $V_S$ la tension d'entrée $V_E$ le plus fidèlement possible. Cette liaison 7A peut comporter une résistance pure.

Soient Y l'admittance de la charge 9, RL la valeur de la résistance 8, i le courant dans les deux charges (on suppose négligeable le courant de base par rapport aux courants d'émetteur et de collecteur), et $V_O$ la tension aux bornes de la résistance 8. On a alors:

$$\frac{V_O}{V_E} \simeq \frac{V_O}{V_S} \simeq \frac{R_L.i}{1/Y.i} \simeq Y.R_L$$

Lorsqu'un tel dispositif de correction est branché à l'entrée d'un câble du type précité (câble branché sur le collecteur de T), on réalise une compensation, liée à la valeur de Y, entre l'entrée du dispositif amplificateur et la sortie du câble. Il est également possible de relier le dispositif de correction de l'invention à la sortie du câble et réaliser une compensation entre l'entrée du câble et la sortie de l'amplificateur, ou bien encore de relier un tel dispositif de correction à chaque extrémité du câble.

La charge 9 comporte dans le présent exemple une résistance RA en parallèle avec deux cellules réactives 2A et 2B pouvant être mises en service individuellement par des commutateurs 10, 11 respectivement. Si l'on estime que, lorsque les deux cellules 2A, 2B sont mises en service simultanément, la compensation ainsi réalisée n'est pas suffisante, on peut, comme représenté en bas de la figure 2, commuter un troisième circuit réactif en parallèle sur les deux premiers en utilisant deux commutateurs supplémentaires 12, 13, ce troisième circuit réactif comportant par exemple une résistance R9 en série avec un condensateur C9. Les commutateurs 10 et 12 sont actionnés par une commande unique et il en est de même pour les commutateurs 11 et 13.

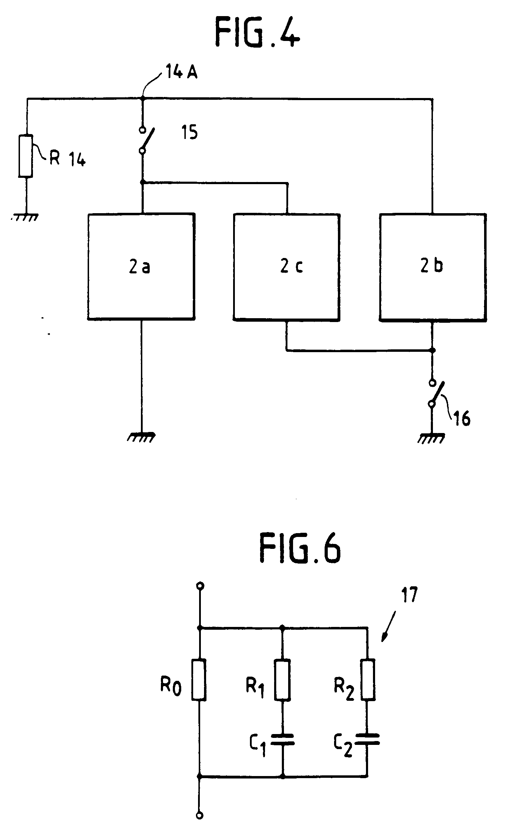

Pour ne pas mettre en oeuvre de commutateurs supplémentaires, on utilise avantageusement le dipôle 14 de la figure 4. Ce dipôle 14, branché entre une borne 14A et la masse, comporte trois cellules 2a, 2b et 2c, et une résistance R14 qui est directement branchée entre la borne 14A et la masse. La borne 14A du dipôle 14 est reliée à une borne d'un commutateur 15 et à une borne de la cellule 2b. L'autre borne du commutateur 15 est reliée à une borne des cellules 2a et 2c. L'autre borne de la cellule 2a est reliée directement à la masse, tandis que l'autre borne des cellules 2b et 2c est reliée à la masse via un commutateur commun 16.

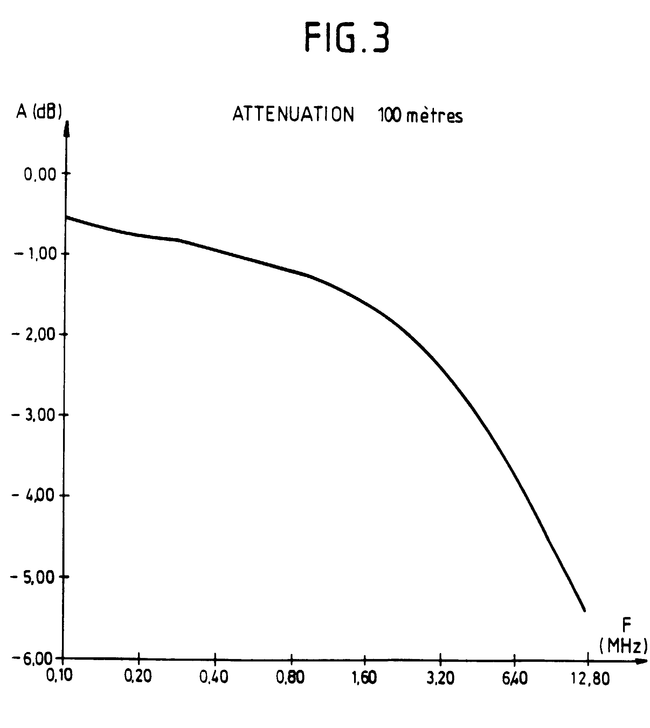

Sur le diagramme de la figure 3, on a représenté, pour une longueur de câble $L_A$ de 100 mètres, l'atténuation A en décibels en fonction de la fréquence de transmission. Cette courbe expérimentale permet de définir une admittance $Y_A$ adaptée à la compensation de la distorsion amplitude/fréquence. Théoriquement, cette atténuation est proportionnelle à la distance (L) et à la racine carrée de la fréquence (f) et peut se mettre sous la forme:

$$A (f,L)=1-K.L.\sqrt{f} \qquad (K \text{ est une constante})$$

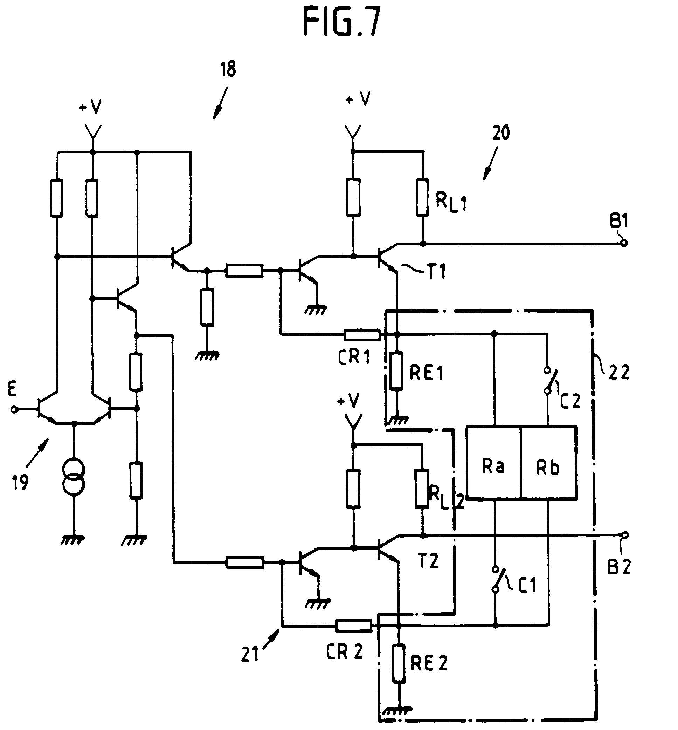

On a représenté en figure 6 un exemple de cellule à résistances et condensateurs permettant de synthétiser l'admittance $Y_A$. Cette cellule 17 comporte trois branches en parallèle. Ces branches comprennent respectivement: une résistance $R_0$, une résistance $R_1$ en série avec un condensateur $C_1$ et une résistance $R_2$ en série avec un condensateur $C_2$. Le spectre de fréquences transmis par le câble et corrigé à l'aide d'une telle cellule est partagé en trois zones dont chacune est traitée par l'une de ces trois branches: la résistance $R_O$ est déterminée en fonction de la composante continue et les très basses fréquences; la branche $R_1$-$C_1$ est déterminée pour les fréquences basses; et la branche $R_2$-$C_2$ est déterminée pour les fréquences hautes.

En choisissant une longueur de câble $L_B$ double de la longueur $L_A$, et en procédant de la même façon pour la synthèse d'une admittance $Y_B$ avec une cellule telle que celle de la figure 6, on trouve que, dans les mêmes conditions de fréquences, les résistances ont des valeurs deux fois plus faibles, tandis que les capacités des condensateurs sont doublées. Ayant réalisé la synthèse des admittances $Y_A$ et $Y_B$, on peut les mettre simultanément en circuit pour obtenir une admittance résultante $Y_R = Y_A + Y_B$ qui convient pour une longueur de câble $L = L_A + L_B$.

On voit que l'on dispose d'un quadruple choix de longueurs de câble avec un seul amplificateur, deux cellules RC et deux interrupteurs qui fournissent quatre états de commutation auxquels correspondent des longueurs de, par exemple, 0, 100, 200 et 300 mètres. On pourrait étendre ces possibilités avec une cellule RC supplémentaire, en parallèle avec les deux autres, et calculée pour une longueur de câble de 400 mètres, terme d'une progression géométrique 100, 200, 400...

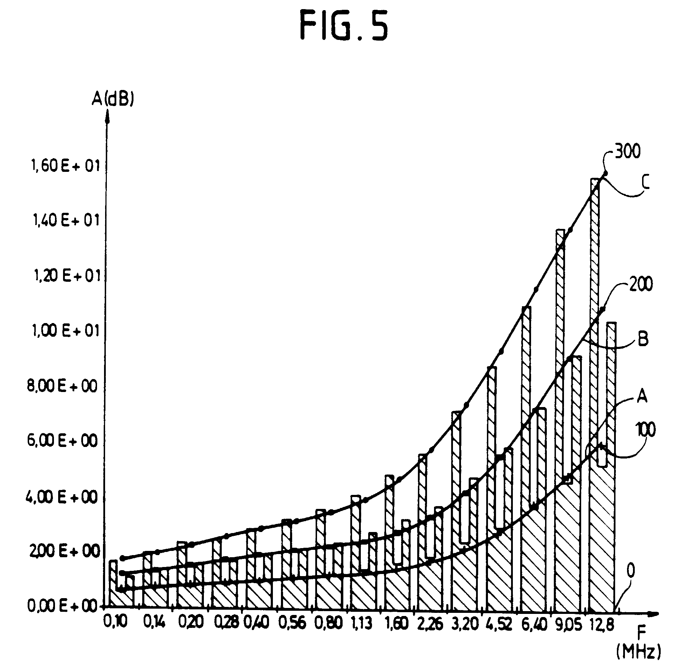

La figure 5 illustre les propriétés d'un dispositif compensateur à quatre positions utilisable pour compenser des longueurs de câble de 0, 100, 200 et 300 mètres, soit un quantum de variation de 100 mètres. L'axe des abscisses correspond à la correction pour un câble de longueur nulle. Les trois courbes A, B, C représentent les atténuations en fonction de la fréquence pour une cellule de correction de câble de 100 m, une cellule de correction de câble de 200 m, et ces deux cellules mises en parallèle, respectivement.

Sur le même principe, on pourrait prévoir un dispositif de correction connecté à l'autre extrémité du câble, mais prévu pour un quantum de variation de 25 mètres, ce qui fournit la compensation pour des longueurs de câble de 0, 25, 50 et 75 mètres. Bien entendu, comme précisé ci-dessus, on peut brancher un dispositif de compensation à commutation de cellules tel que celui décrit ci-dessus à chaque extrémité du câble, l'un pour un quantum de variation de 100m, et l'autre pour un quantum de 25 m. On pourrait donc couvrir ainsi une plage de compensation de 0 à 387,5 m avec un quantum d'erreur de 12,5 m.

Le dispositif de compensation illustré en figures 2 et 4 est un montage à sortie asymétrique. Pour éviter le rayonnement d'un câble bifilaire, il est préférable de réaliser une excitation symétrique des deux conducteurs de chaque paire. On a représenté en figure 7 le schéma d'un dispositif de compensation 18 réalisant une telle excitation symétrique. Ce dispositif 18 comporte un amplificateur différentiel d'entrée 19 dont le transistor d'entrée reçoît sur sa base (borne E) le signal vidéo à transmettre sur le câble et dont chaque sortie attaque un circuit amplificateur 20, 21 à contre-réaction CR1, CR2, respectivement. Les collecteurs des transistors de sortie T1, T2 des circuits 20 et 21 sont chargés par des résistances pures $R_{L1}$ et $R_{L2}$ et sont reliés chacun à un des fils du câble (bornes B1 et B2). Les émetteurs de T1 et T2 sont reliés chacun à une borne d'un dipôle de compensation 22. Le dipôle 22 peut comporter, comme représenté sur la figure 7, trois branches mises en parallèle. La première branche comporte deux résistances d'émetteur de T1 et T2 (RE1 et RE2 en série dans cette branche), et les deux autres comportent chacune une cellule réactive Ra, Rb en série avec un commutateur C1, C2. On peut ainsi brancher séparément ou en parallèle ces cellules réactives.

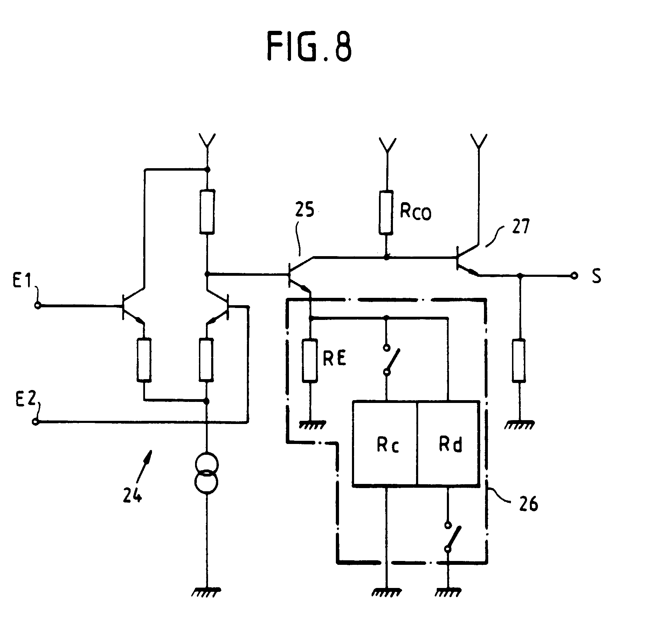

On a représenté en figure 8 le schéma d'un dispositif amplificateur réjecteur de mode commun 23 pour câble bifilaire. Ce dispositif comporte un amplificateur différentiel d'entrée 24 dont les bornes d'entrée E1, E2 sont reliées à la sortie du câble. L'amplificateur 24 est suivi d'un transistor amplificateur 25 comportant une charge résistive de collecteur Rco et une charge réactive d'émetteur (dipôle 26 similaire au dipôle 22, mais avec une seule résistance RE d'émetteur). Le collecteur du transistor 25 est avantageusement relié à un transistor 27 d'adaptation d'impédance à montage en collecteur commun.

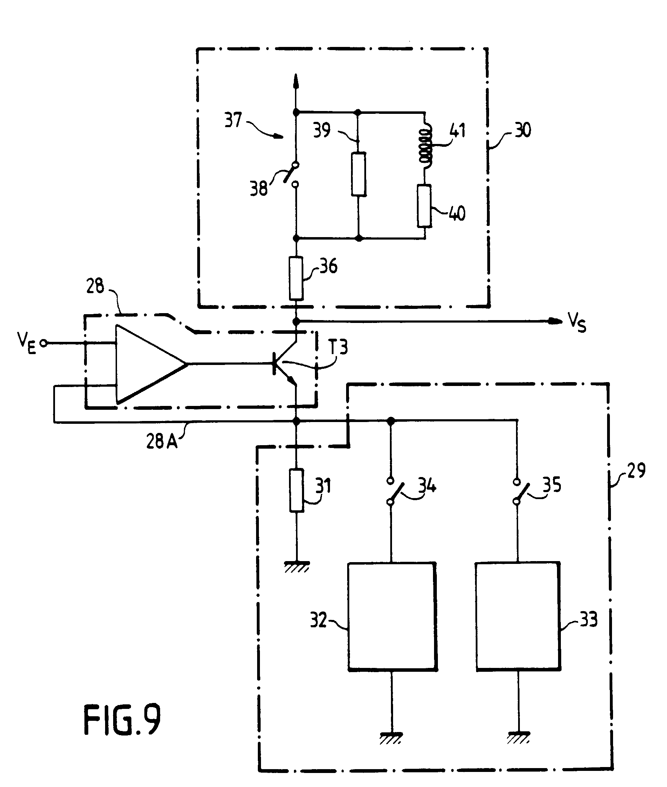

On a représenté en figure 9 le schéma simplifié d'une variante avantageuse du dispositif de correction de l'invention. Ce dispositif comporte un circuit amplificateur 28 à boucle de contre-réaction 28A. L'émetteur du transistor de sortie T3 est relié à un dipôle réactif 29, et son collecteur est relié à un autre dipôle réactif 30.

Le dipôle 29 comporte une résistance 31 en parallèle avec deux cellules 32, 33 commutables individuellement par des commutateurs respectifs 34, 35, et qui peuvent par exemple être constituées comme la cellule 17 de la figure 6.

Le dipôle 30 comprend une résistance de charge 36 en série avec une cellule de correction 37. Cette cellule 37 comporte trois branches en parallèle, qui comprennent respectivement: un commutateur 38, une résistance 39, et une résistance 40 en série avec une inductance 41.

La cellule 37 permet d'ajouter un pas de correction, correspondant par exemple au plus petit quantum de longueur de câble à corriger, aux pas de correction dus au dipôle 29. Les commutateurs 34,35 et 38 étant ouverts, la cellule 37 corrige alors une longueur de câble L. La mise en circuit de la cellule 32 corrige une longueur de câble 2L, et celle de la cellule 33 une longueur de câble 4L.

Bien entendu, une cellule semblable à la cellule 37 pourrait être insérée en série avec la résistance 8, ou en série avec la résistance RL1 et la résistance RL2. Il est également bien entendu que le dipôle 29 pourrait être remplacé par le dipôle 9 de la figure 2 ou par le dipôle de la figure 4.

**Revendications**

1. Dispositif de compensation d'une ligne de transmission d'un réseau de télédistribution disposé en cascade avec cette ligne, et fonctionnant à des fréquences comprises entre 25Hz et 10MHz, ce dispositif comportant à l'une au moins des extrémités de cette ligne des moyens amplificateurs, des moyens à réactance destinés à égaliser la caractéristique amplitude/fréquence de la ligne, et des moyens commutateurs sélectionnant des moyens à mettre en oeuvre pour une longueur de câble prédéterminée parmi plusieurs, comportant un amplificateur unique (7, 18, 28) à étage de sortie (T, T1, T3) du type à charge partagée entre le collecteur et l'émetteur, la charge d'émetteur comportant des éléments commutables, caractérisé par le fait qu'il comporte à au moins une extrémité du câble à compenser l'amplificateur unique (7, 18; 28) dont la charge comporte une partie réactive commutable (9, 14, 22, 17, 26, 37, 29) constituée par au moins un condensateur non galvanique et par une résistance définissant ensemble une admittance (YA) adaptée à la compensation de la distorsion amplitude/fréquence.

2. Dispositif selon la revendication 1, caractérisé par le fait que l'amplificateur unique comporte une contre-réaction non réactive (7A, CR1, CR2, 28A).

3. Dispositif selon la revendication 1 ou 2, caractérisé par le fait que la charge réactive comporte une résistance (RA, R14, RE1, RE2, RE, 31) en parallèle avec au moins une cellule commutable (2A, 2B, R9, C9 ou 2a, 2b, 2c, ou Ra, Rb ou Rco, Rd ou 32, 33) de façon à effectuer des corrections correspondant à plusieurs longueurs de câble différentes.

4. Dispositif selon l'une quelconque des revendications précédentes, caractérisé par le fait que les corrections obtenues en introduisant un par un les moyens à réactance correspondent à des longueurs de ligne nulle ou en progression géométrique.

5. Dispositif selon la revendication 3 ou 4, caractérisé par le fait que chaque cellule (17) comporte trois branches mises en parallèle, chacune de ces branches agissant dans un domaine de fréquences propre.

6. Dispositif selon la revendication 5, caractérisé par le fait que l'une des branches comporte une résistance ($R_O$), et chacune des deux autres une résistance ($R_1$, $R_2$) en série avec un condensateur ($C_1$, $C_2$).

7. Dispositif selon l'une des revendications précédentes, pour un câble bifilaire, caractérisé par le fait que le dispositif de compensation (18) est disposé à l'entrée du câble et comporte un amplificateur différentiel d'entrée (19) dont une sortie attaque l'étage de sortie (T1), et dont l'autre sortie attaque un autre étage de sortie (T2), une charge réactive commutable (22) étant reliée entre les émetteurs des transistors de sortie de ces étages, chacun des fils du câble bifilaire étant relié au collecteur du transistor de l'étage de sortie correspondant.

8. Dispositif selon l'une des revendications précédentes, caractérisé par le fait que la charge de collecteur (30) comprend des éléments réactifs (41).

9. Dispositif selon l'une des revendications précédentes, pour un câble bifilaire, caractérisé par le fait que le circuit de compensation (24) est disposé à la sortie du câble et comporte un amplificateur différentiel d'entrée dont chaque entrée (E1, E2) est reliée à un fil du câble et dont la sortie est reliée à l'étage de sortie (25).

**Patentansprüche**

1. Kompensationsvorrichtung für eine Übertragungsleitung eines Fernsehverteilungsnetzes, die in Kaskade mit dieser Leitung angeordnet ist und auf Frequenzen zwischen 25 Hz und 10 MHz betrieben wird, wobei diese Vorrichtung an mindestens einem Ende dieser Leitung Verstärkermittel, Reaktanzmittel zum Ausgleichen der Amplituden-Frequenzkennlinie der Leitung und Schaltermittel umfaßt, die für eine vorbestimmte Kabellänge unter mehreren in Betrieb zu nehmende Mittel auswählen, die einen einzigen Verstärker (7, 18, 28) der Ausgangsstufe (T, T1, T3) des Typs mit zwischen dem Kollektor und dem Emitter aufgeteilter Last umfassen, wobei die Emitterlast schaltbare Elemente umfaßt, dadurch gekennzeichnet, daß sie an mindestens einem Ende des zu kompensierenden Kabels den einzigen Verstärker (7, 18; 28) umfaßt, dessen Last einen schaltbaren reaktiven Teil (9, 14, 22, 17, 26, 37, 29) umfaßt, der aus mindestens einem nichtgalvanischen Kondensator und aus einem Widerstand besteht, die zusammen eine Admittanz (YA) zur Kompensation der Amplituden-Frequenzverzerrung definieren.

2. Vorrichtung nach Anspruch 1, dadurch gekennzeichnet, daß der einzige Verstärker eine nichtreaktive Gegenkopplung (7A, CR1, CR2, 28A) umfaßt.

3. Vorrichtung nach Anspruch 1 oder 2, dadurch gekennzeichnet, daß die Blindlast einen Widerstand (RA, R14, RE1, RE2, RE, 31) parallel zu mindestens einer schaltbaren Zelle (2A, 2B, R9, C9 oder 2a, 2b, 2c oder Ra, Rb oder Rco, Rd oder 32, 33) umfaßt, um Korrekturen entsprechend mehreren unterschiedlichen Kabel längen zu bewirken.

4. Vorrichtung nach einem der vorhergehenden Ansprüche, dadurch gekennzeichnet, daß die bei schrittweiser Einführung der Reaktanzmittel erhaltenen Korrekturen Leitungslängen von Null oder in geometrischer Abstufung entsprechen.

5. Vorrichtung nach Anspruch 3 oder 4, dadurch gekennzeichnet, daß jede Zelle (17) drei parallel geschaltete Zweige umfaßt, wobei jeder dieser Zweige in einem eigenen Frequenzbereich wirkt.

6. Vorrichtung nach Anspruch 5, dadurch gekennzeichnet, daß einer der Zweige einen Widerstand ($R_0$) und jeder der beiden anderen einen Widerstand ($R_1$, $R_2$) in Reihe mit einem Kondensator ($C_1$, $C_2$) umfaßt.

7. Vorrichtung nach einem der vorhergehenden Ansprüche für ein zweiadriges Kabel, dadurch gekennzeichnet, daß die Kompensationsvorrichtung (18) am Eingang des Kabels angeordnet ist und einen Eingangs-Differenzverstärker (19) umfaßt, dessen einer Ausgang die Ausgangsstufe (T1) ansteuert und dessen anderer Ausgang eine andere Ausgangsstufe (T2) ansteuert, wobei eine schaltbare Blindlast (22) zwischen den Emittern der Ausgangstransistoren dieser Stufen geschaltet ist, wobei jede der Adern des zweiadrigen Kabels mit dem Kollektor des Transistors der entsprechenden Ausgangsstufe verbunden ist.

8. Vorrichtung nach einem der vorhergehenden Ansprüche, dadurch gekennzeichnet, daß die Kollektorlast (30) reaktive Elemente (41) umfaßt.

9. Vorrichtung nach einem der vorhergehenden Ansprüche für ein zweiadriges Kabel, dadurch gekennzeichnet, daß die Kompensationsschaltung (24) am Ausgang des Kabels angeordnet ist und einen Eingangs-Differenzverstärker umfaßt, dessen jeweiliger Eingang (E1, E2) mit einer Ader des Kabels verbunden ist und dessen Ausgang mit der Ausgangsstufe (25) verbunden ist.

**Claims**

1. Compensation device for a transmission line of a remote distribution network arranged in cascade with this line, and operating at frequencies lying between 25 Hz and 10 MHz, this device including, at at least one of the ends of this line, amplifier means, reactance means intended to equalize the amplitude/frequency characteristic of the line, and changeover switching means selecting means to be employed for a length of cable which is predetermined from among several, including a single amplifier (7, 18, 28) with output stage (T, T1, T3) of the type with a load shared between the collector and the emitter, the emitter load including switchable elements, characterized in that it includes, at at least one end of the cable to be compensated, said single amplifier (7, 18; 28), the load of which includes a switchable reactive part (9, 14, 22, 17, 26, 37, 29) consisting of at least one non-galvanic capacitor and of a resistor together defining an admittance (YA) matched to the compensation for the amplitude/frequency distortion.

2. Device according to Claim 1, characterized in that the single amplifier includes non-reactive negative feedback (7A, CR1, CR2, 28A).

3. Device according to Claim 1 or 2, characterized in that the reactive load includes a resistor (RA, R14, RE1, RE2, RE, 31) in parallel with at least one switchable cell (2A, 2B, R9, C9 or 2a, 2b, 2c, or Ra, Rb or Rco, Rd or 32, 33) so as to perform corrections corresponding to several different cable lengths.

4. Device according to any one of the preceding claims, characterized in that the corrections obtained by introducing the reactance means one by one correspond to line lengths which are zero or in a geometric progression.

5. Device according to Claim 3 or 4, characterized in that each cell (17) includes three branches placed in parallel, each of these branches acting in a specific frequency domain.

6. Device according to Claim 5, characterized in that one of the branches includes a resistor ($R_0$), and each of the other two includes a resistor ($R_1$, $R_2$) in series with a capacitor ($C_1$, $C_2$).

7. Device according to one of the preceding claims, for a two-wire cable, characterized in that the compensation device (18) is arranged at the inlet to the cable and includes a differential input amplifier (19), one output of which drives the output stage (T1), and the other output of which drives another output stage (T2), a switchable reactive load (22) being linked between the emitters of the output transistors of these stages, each of the wires of the two-wire cable being linked to the collector of the transistor of the corresponding output stage.

8. Device according to one of the preceding claims, characterized in that the collector load (30) comprises reactive elements (41).

9. Device according to one of the preceding claims, for a two-wire cable, characterized in that the compensation circuit (24) is arranged at the exit from the cable and includes a differential input amplifier, each input (E1, E2) of which is linked to one wire of the cable, and the output of which is linked to the output stage (25).

VE

1a    1b    1c

2a    2b    2c

1    2    3    4    5    6

FIG.1

FIG.2

# FIG.3

ATTENUATION   100 mètres

# FIG.4

14 A

R 14

15

2a    2c    2b

16

# FIG.6

17

R0   R1   R2

C1   C2

# FIG. 5

# FIG.7

# FIG.8

EP 0 389 341 B1

FIG.9

14